# EUROPEAN PATENT SPECIFICATION

(11) **EP 3 136 658 B1**
(45) Date of publication and mention of the grant of the patent: **24.06.2020**
(21) Application number: 16163346.6
(22) Date of filing: 31.03.2016
(51) Int. Cl.: H04L 12/58

(54) **METHOD, DEVICE, TERMINAL DEVICE, COMPUTER PROGRAM AND RECORDING MEDIUM FOR CHANGING EMOTICON IN CHAT INTERFACE**
VERFAHREN, VORRICHTUNG, ENDGERÄTEVORRICHTUNG, COMPUTERPROGRAMM UND AUFZEICHNUNGSMEDIUM ZUR UMSCHALTUNG VON EMOTICONS IN EINER CHAT-OBERFLÄCHE
PROCÉDÉ, DISPOSITIF, DISPOSITIF TERMINAL, PROGRAMME INFORMATIQUE ET SUPPORT D'ENREGISTREMENT POUR CHANGER UNE ÉMOTICÔNE DANS UNE INTERFACE DE CONVERSATION

(30) Priority: 26.08.2015 CN 201510531710
(43) Date of publication of application: 01.03.2017
(73) Proprietor: Xiaomi Inc., Beijing 100085 (CN)
(72) Inventor: LUO, Jixi, 100085 Haidian District (CN); LIN, Jinbin, 100085 Haidian District (CN); ZHANG, Youzhi, 100085 Haidian District (CN)
(74) Representative: Loustalan, Paul William

(56) References cited:
- WO-A1-2008/135097
- KR-B1- 101 254 719
- US-A1- 2006 242 593
- US-A1- 2014 143 682
- US-A1- 2014 156 762

## Description

### TECHNICAL FIELD

The present invention generally relates to the technical field of Internet, and more particularly, relates to a method, a device, a terminal device, a computer program and a recording medium for changing an emoticon in a chat interface.

### BACKGROUND

When users chatting in text via an instant messaging tool, current feelings of the users may be expressed by various emoticons. In general, after a user receives an emoticon from the other side, the emoticon will be directly displayed in the user's current chat interface, and the user cannot change the emoticon which has been received from the other side. Therefore, for the user, the whole chat duration seems very dull since the emoticons in the chat interface cannot be changed.

Published US patent application US2014/0156762A1 discloses a device and method for replacing typed emoticons with photographic images.

Published Korean patent document KR101254719B1 discloses using message history to edit inputted characters or emoticons.

### SUMMARY

To overcome above problems in the related arts, the present invention provides a method, a device, a terminal device, a computer program and a recording medium for changing an emoticon in a chat interface, enabling received emoticons to be dynamically changed.

The invention is defined in the independent claims to which reference is now made. Advantageous features are set out in the dependent claims.

The technical solutions of the embodiments of this invention have the following advantageous effects: when the instant message received by the chat interface of the instant messaging tool contains the first emoticon allowed to be changed is detected, the first value corresponding with the at least one first emoticon and the second value corresponding with the second emoticon configured to change the first emoticon are determined to change the first emoticon to the form corresponding with the value result, so the emoticons of instant chat are provided with value results capable of expressing feelings, and the received emoticons may be dynamically changed according to the value results, thereby allowing a user to perceive dynamic changes of the emoticons to make the instant chat more interesting.

Moreover, the step of determining the value respectively corresponding with each first emoticon in the at least one first emoticon according to the first emoticon-value list details the value respectively corresponding with the at least one first emoticon, thereby improving changing diversity of the emoticons in the chat interface to make the instant chat more interesting.

A quantization range of the emoticons is extended by updating the new emoticon and its corresponded value into the emoticon-value list, so that the emoticons in the instant chat are more diverse.

If the second emoticon-value list is the same as the first emoticon-value list, the values of the emoticons may be unified; and if the second emoticon-value list is different from the first emoticon-value list, the values of the emoticons may be diverse.

In one particular embodiment, the steps of the method for changing an emoticon in a chat interface are determined by computer program instructions.

Consequently, according to a fourth aspect, the invention is also directed to a computer program for executing the steps of a method for changing an emoticon in a chat interface as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for changing an emoticon in a chat interface according to an exemplary embodiment.
Fig. 2A is a flow chart showing a method for changing an emoticon in a chat interface according to a first exemplary embodiment.
Fig. 2B is a first scene view showing a method for changing an emoticon in a chat interface according to the first exemplary embodiment.
Fig. 2C is a second scene view showing a method for changing an emoticon in a chat interface according to the first exemplary embodiment.
Fig. 2D is a third scene view showing a method for changing an emoticon in a chat interface according to the first exemplary embodiment.
Fig. 2E is a fourth scene view showing a method for changing an emoticon in a chat interface according to the first exemplary embodiment.
Fig. 3 is a flow chart showing a method for changing an emoticon in a chat interface according to a second exemplary embodiment.
Fig. 4 is a block diagram of a device for changing an emoticon in a chat interface according to an exemplary embodiment.
Fig. 5 is a block diagram of another device for changing an emoticon in a chat interface according to an exemplary embodiment.
Fig. 6 is a block diagram of a device suitable for change of an emoticon in a chat interface according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

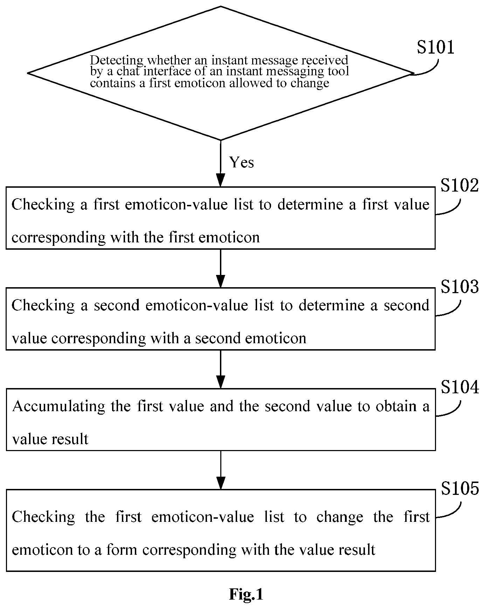

Fig. 1 is a flow chart showing a method for changing an emoticon in a chat interface according to an exemplary embodiment. The method may be used for a terminal device (such as a smart phone, a tablet PC, or a desktop computer), and may be implemented by installing an instant messaging tool into the terminal device. As shown in Figure 1, the method for changing the emoticon in the chat interface comprises the following steps from S101 to S103:
Step S101, detecting whether an instant message received by the chat interface of an instant messaging tool contains a first emoticon allowed to be changed.

In another embodiment, determining whether the instant message contains at least one emoticon by detecting whether the instant message contains a character corresponding with the emoticon.

Step S102, checking a first emoticon-value list to determine a first value corresponding with the first emoticon if the instant messaging tool contains the first emoticon, the first emoticon value list comprising multiple first emoticons and the values corresponding with the first emoticons.

In another embodiment, emoticons in the instant messaging tool may be set with values, and different emoticons correspond with different values representing intensities of feelings. In another embodiment, different emoticons may correspond to different values, positive values are configured to indicate emoticons representing positive emotions and negative values are configured to indicate emoticons representing negative emotions.

For example, the value corresponding with a sad emoticon 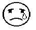 is -2, the value corresponding with a miserable emoticon 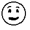 is -4, the value corresponding with a smile emoticon 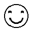 is 1, the value corresponding with an ecstatic emoticon 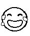 is 4, and the values in this group represent intensities of feelings. If an instant message contains one emoticon, a first value of the emoticon in the instant message can be determined by the value corresponding with the emoticon, and if the instant message contains two or more emoticons, a first value of the emoticons in the instant message can be determined by the sum of the values respectively corresponding with the two or more emoticons. In a chat, when a user sends several emoticons with negative values, for instance, four miserable emoticons " 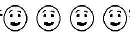 ", that is, the emotion value is -16, while another user who wants to improve the sender's emotion in the chat group can change the four miserable emoticons to four ecstatic emoticons by @ the sender's name and then inputting eight ecstatic emoticons " 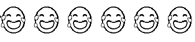 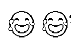 ".

Step S103, checking a second emoticon-value list to determine a second value corresponding with a second emoticon, wherein the second emoticon is configured to change the first emoticon, the second emoticon-value list comprising multiple second emoticons and values corresponding with the second emoticons.

In another embodiment, both the first emoticon-value list and the second emoticon-value list may be built-in the instant messaging tool and may be changeable. When a user needs to modify values in the first emoticon-value list and the second emoticon-value list, the values required to be modified may be written to the first and second emoticon-value lists.

Step S104, accumulating the first value and the second value to obtain a value result.

Step S105, checking the first emoticon-value list to change the first emoticon to a form corresponding with the value result.

In another embodiment, emoticons input into an input box may be detected to determine values respectively corresponding with the emoticons in the input box, a second total value of the emoticons input into the input box is calculated, and a value result is determined by the first value and the second value; therefore it is determined how to change at least one first emoticon in the instant message according to the value result. In another embodiment, a form corresponding with the value result can be set by a user. For example, if the form corresponding with the value result is a hollow heart, the larger the value is, the more the hollow heart is filled, or the form corresponding with the value result may be a combination of corresponding positive emotions, or the like.

In the embodiments, when the instant message received by the chat interface of the instant messaging tool contains the first emoticon allowed to be changed is detected, the first value corresponding with the at least one first emoticon and the second value corresponding with the second emoticon configured to change the first emoticon are determined to change the first emoticon to the form corresponding with the value result, so that the emoticons of instant chat are provided with value results capable of expressing feelings, and the received emoticons may be dynamically changed according to the value results, thereby allowing the user to receive the dynamic changes of the emoticons to make the instant chat more interesting.

In another embodiment, determining a first value corresponding with a first emoticon if an instant message contains at least one first emoticon may comprise:
determining a value respectively corresponding with each first emoticon in the at least one first emoticon according to the first emoticon-value list; and
adding the values corresponding with the first emoticons to obtain the first value.

In another embodiment, the method further comprises:
detecting whether a new emoticon exists in an emoticon library of the instant messaging tool;
determining a value corresponding with the new emoticon if it is detected that the new emoticon exists in the emoticon library; and
updating the new emoticon and the value corresponding with the new emoticon into the first emoticon-value list.

In another embodiment, the second emoticon-value list may be the same as or different from the first emoticon-value list.

Refer to subsequent embodiments to specifically change an emoticon in a chat interface.

Hereto, the methods provided by the embodiments make the emoticons with the value results express feelings during instant chat, and the received emoticons may be dynamically changed according to the value results, so that the user will receive the dynamic changes of the emoticons, and the instant chat may be more interesting.

The following specific embodiments illustrate technical schemes provided by the embodiments of this invention.

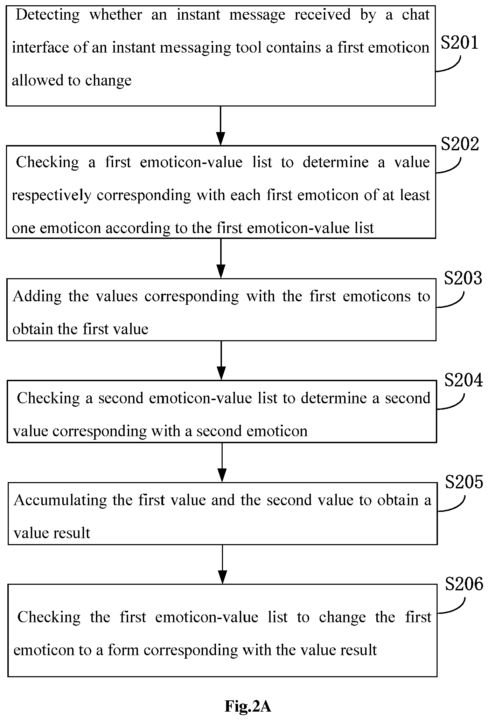

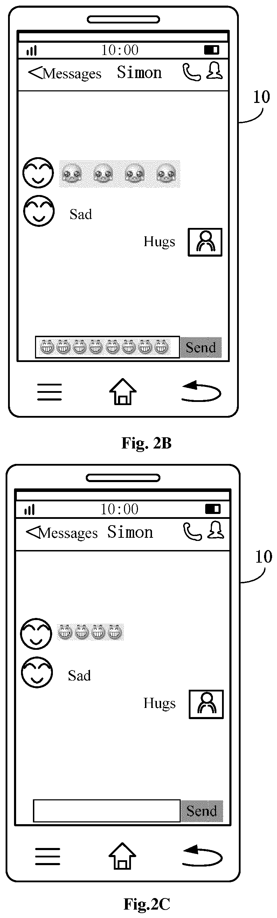

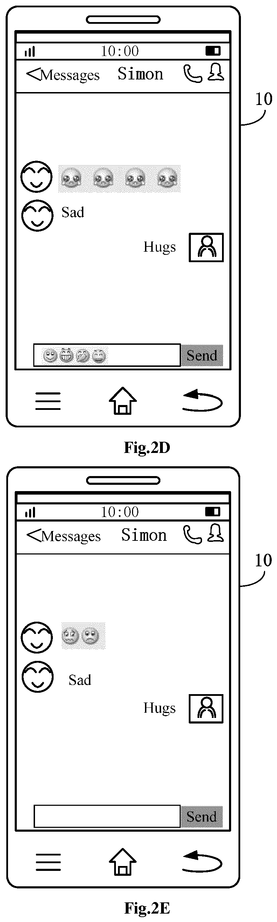

Fig. 2A is a flow chart showing a method for changing an emoticon in a chat interface according to a first exemplary embodiment. Fig. 2B is a first scene view showing a method for changing an emoticon in a chat interface according to the first exemplary embodiment. Fig. 2C is a second scene view showing a method for changing an emoticon in a chat interface according to the first exemplary embodiment. Fig. 2D is a third scene view showing a method for changing an emoticon in a chat interface according to the first exemplary embodiment. Fig. 2E is a fourth scene view showing a method for changing an emoticon in a chat interface according to the first exemplary embodiment. By use of the above methods provided by the embodiments of the invention, an example thereof is taken to illustrate how to change a received emoticon. As shown in Fig. 2A, the method comprises the following steps:
Step S201, detecting whether an instant message received by the chat interface of an instant messaging tool contains a first emoticon allowed to be changed.

The description of step S201 is referred to that of step S101, and will not be elaborated herein.

Step S202, checking a first emoticon-value list to determine a first value corresponding with the first emoticon if the instant message contains the first emoticon, the first emoticon-value list comprising multiple first emoticons and values corresponding with the first emoticons.

Step S203, adding the values corresponding with the first emoticons to obtain the first value.

Step S204, checking a second emoticon-value list to determine a second value corresponding with a second emoticon, wherein the second emoticon is configured to change the first emoticon, the second emoticon-value list comprising multiple second emoticons and values corresponding with the second emoticons.

In another embodiment, the second emoticon-value list may be the same as or different from the first emoticon-value list, if the second emoticon-value list is the same as the first emoticon-value list, the values of the emoticons may be unified, and if the second emoticon-value list is different from the first emoticon-value list, the values of the emoticons may be diverse.

Step S205, accumulating the first value and the second value to obtain a value result.

Step S206, checking the first emoticon-value list to change the first emoticon to a form corresponding with the value result.

As an exemplary scene, if it is detected that an instant message from the communication peer contains four crying emoticons, wherein the value corresponding with each crying emoticon is -4, i.e. a first value of the instant message is -16, a second emoticon-value list is checked to determine a second value corresponding with a second emoticon, so that a terminal device can prompt the user whether the emoticons from the other side need to change in an input box, and if yes, for example, as shown in Fig. 2B, the terminal device user inputs eight ecstatic emoticons into the input box, as a second value corresponding with the eight ecstatic emoticons is 32, and 32-16=16, the four first emoticons are changed to a form corresponding with a value result of 16; in another embodiment, a form corresponding with a value result may be a preset icon combination, or a preset icon, for instance, as the value result 16 divided by 4 equals 4, the crying emoticons from the communication peer may be changed to four ecstatic emoticons, specifically shown in Fig. 2C; and in another embodiment, as shown in Fig. 2D, after the terminal device user inputs a smile emoticon (with a corresponding value of 1), an ecstatic emoticon (with a corresponding value of 4), a tittered emoticon (with a corresponding value of 3) and a giggle emoticon (with a corresponding value of 2) in the input box, a second value of the four emoticons is 10, i.e., 1+4+3+2=10, and the value result is -6, namely, 10-16=-6, so that a new value result -6 divided by 4 equals -1.5, and the cry emoticons from the communication peer may be changed to a pouting emoticon and a sad emoticon as -1.5 is smaller than 0, specifically shown in Fig. 2E.

In another embodiment, if it is determined that the chat of the terminal device user is group chat, determining the sender corresponding with the emoticons required to be changed in a group chat, e.g., by selecting (@) the sender's name, determining a second value of the emoticons input into the input box by the sender, at least one emoticon sent by the sender is determined to change according to the first value and the second value.

On the basis of the technical effects of the above embodiments, the embodiment has the following advantages: the value respectively corresponding with each first emoticon of the at least one first emoticon is determined according to the first emoticon-value list, so that the value corresponding with the at least one first emoticon is fractionized , thereby improving the changing diversity of the emoticons in the chat interface to make the instant chat more interesting.

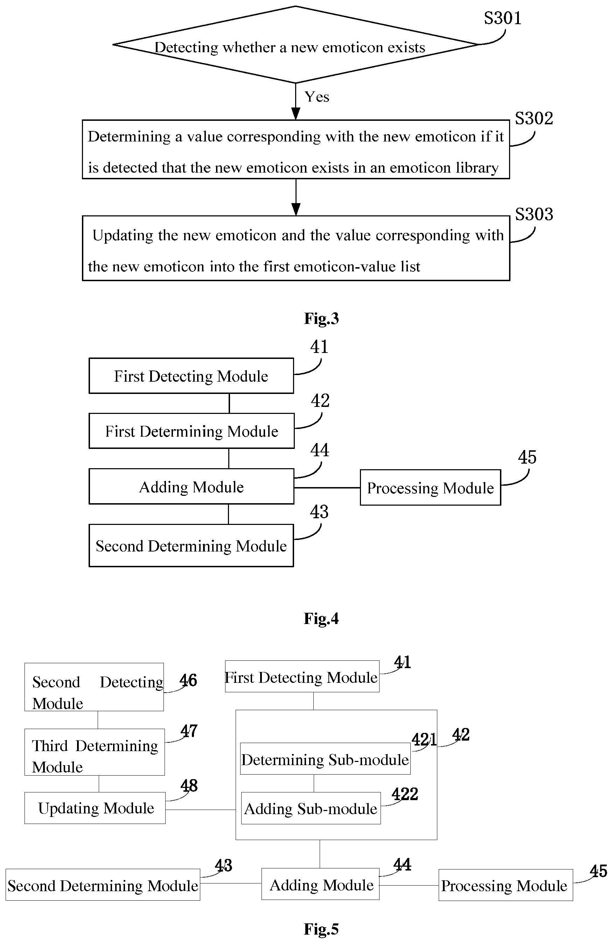

Fig. 3 is a flow chart showing a method for changing an emoticon in a chat interface according to a second exemplary embodiment. By use of the above methods provided by the embodiments of the invention, an example thereof is taken to illustrate how to update a first emoticon-value list. As shown in Fig. 3, the method comprises the following steps:
Step S301, detecting whether a new emoticon exists in an emoticon library of an instant messaging tool.

In another embodiment, a terminal device user can store a received emoticon sent by a communication peer to a memory module of the instant messaging tool, to use the received emoticon as a new emoticon, such as a picture from "Demoncrab-Tuzi" series. After receiving the picture from "Demoncrab-Tuzi" series, the user stores the picture into the memory module of the instant messaging tool to form the new emoticon of the invention.

Step S302, determining a value corresponding with the new emoticon if it is detected that the new emoticon exists in the emoticon library.

In another embodiment, the setting of the value corresponding with the new emoticon may be customized by a user according to the feeling represented by the emoticon, and will be not limited by the invention.

Step S303, updating the first emoticon-value list with the new emoticon and the value corresponding with the new emoticon.

On the basis of the technical effects of the above embodiments, the embodiment has the following advantage: a quantization range of the emoticons is extended by updating the new emoticon and the value corresponding with the emoticon into the emoticon-value list, so that the emoticons in the instant chat are more diverse.

Fig. 4 is a block diagram of a device for changing an emoticon in a chat interface according to an exemplary embodiment, used for a terminal device installed with an instant messaging tool. As shown in Fig. 4, the device for changing the emoticon in the chat interface comprises:
a first detecting module 41 configured to detect whether an instant message received by the chat interface of the instant messaging tool contains a first emoticon allowed to be changed;
a first determining module 42 configured to check a first emoticon-value list to determine a first value corresponding with the first emoticon if the first detecting module 41 detects that the instant message contains the first emoticon, the first emoticon-value list comprising multiple first emoticons and values corresponding with the first emoticons;
a second determining module 43 configured to check a second emoticon-value list to determine a second value corresponding with a second emoticon, wherein the second emoticon is configured to change the first emoticon, the second emoticon-value list comprising multiple second emoticons and values corresponding with the second emoticons;
an adding module 44 configured to accumulate the first value determined by the first determining module 42 and the second value determined by the second determining module 43 to obtain a value result; and
a processing module 45 configured to check the first emoticon-value list to change the first emoticon to a form corresponding with the value result obtained by the adding module 44.

Fig. 5 is a block diagram of another device for changing an emoticon in a chat interface according to an exemplary embodiment. As shown in Fig. 5, on the basis of the above embodiment shown in Fig. 4, if the instant message contains the at least one first emoticon, the first determining module 42 may comprise:
a determining sub-module 421 configured to determine a value respectively corresponding with each first emoticon in the at least one first emoticon according to the first emoticon-value list; and
an adding sub-module 422 configured to add the values determined by the determining sub-module 421 and corresponding with the first emoticons to obtain the first value.

In another embodiment, the device further comprises:
a second detecting module 46 configured to detect whether a new emoticon exists in an emoticon library of the instant messaging tool;
a third determining module 47 configured to determine a value corresponding with the new emoticon if the second detecting module 46 detects that the new emoticon exists in the emoticon library; and
an updating module 48 configured to update the new emoticon and the new emoticon corresponded value determined by the third determining module 47 into the first emoticon-value list to allow the first determining module 42 to check an updated first emoticon-value list.

In another embodiment, a second emoticon-value list may be the same as or different from the first emoticon-value list.

With respect to the devices in the above embodiments, the specific manners for performing operations in individual modules therein have been described in detail in the embodiments regarding the related methods and will not be elaborated herein.

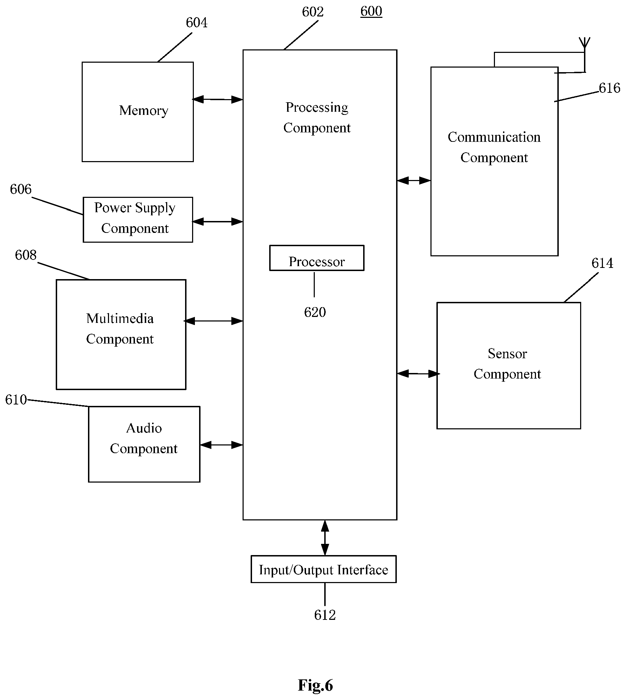

Fig. 6 is a block diagram of a device suitable for change of an emoticon in a chat interface according to an exemplary embodiment. Fox example, a device 600 may be a mobile phone, a computer, a digital broadcast terminal, a message transceiver, a game console, a tablet device, a medical device, fitness equipment, a personal digital assistant, or the like.

Referring to Fig. 6, the device 600 may include one or more following components: a processing component 602, a memory 604, a power supply component 606, a multimedia component 608, an audio component 610, an input/output (I/O) interface 612, a sensor component 614 and a communication component 616.

The processing component 602 typically controls overall operations of the device 600, such as the operations associated with display, telephone calls, data communications, camera operations and recording operations. The processing component 602 may include one or more processors 620 to execute instructions to perform all or part of the steps in the above described methods. Moreover, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operation of the device 600.Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 606 provides power to various components of the device 600.The power supply component 606 may include a power supply management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive an external multimedia datum while the device 600 is in an operation mode, such as a photographing mode or a video mode. Each of the front and rear cameras may be a fixed optical lens system or have a focus and optical zoom capability.

The audio component 610 is configured to output and/or input audio signals. For example, the audio component 610 includes a microphone (MIC) configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user's contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

It will be appreciated that the present invention is not limited to the exact construction that has been described above and illustrated in the accompanying drawings, and that various modifications and changes can be made without departing from the scope thereof.

## Claims

1. A method for changing an emoticon in a chat interface performed by a terminal device having an instant messaging tool installed, and being **characterized by** comprising:
detecting (S101), at a first detecting module (41), whether an instant message received by the chat interface of the instant messaging tool contains a first emoticon allowed to be changed;
checking (S102), at a first determining module (42), a first emoticon-value list to determine a first value corresponding with the first emoticon if the instant message contains the first emoticon, the first emoticon-value list comprising multiple first emoticons and values corresponding with the first emoticons;
receiving, at an input box of the chat interface, a second emoticon from a user;
checking (S103), at a second determining module (43), a second emoticon-value list to determine a second value corresponding with the second emoticon, wherein the second emoticon is configured to change the first emoticon, the second emoticon-value list comprising multiple second emoticons and values corresponding with the second emoticons;
adding (S104), at an adding module (44), the first value and the second value to obtain a value result; and
checking (S105), at a processing module, the first emoticon-value list to change the first emoticon to an emoticon form corresponding to the value result.

2. The method of claim 1, wherein the step of determining the first value corresponding with the first emoticon if the instant message contains at least one first emoticon comprises:
determining a value respectively corresponding with each first emoticon in the at least one first emoticon according to the first emoticon-value list; and
adding the values corresponding with the first emoticons to obtain the first value.

3. The method of claim 1 or 2, wherein the method further comprises:
detecting (S301),at a second detecting module (46), whether a new emoticon exists in an emoticon library of the instant messaging tool;
determining (S302), at a third determining module (47), a value corresponding with the new emoticon if it is detected that the new emoticon exists in the emoticon library; and
updating (S303), at an updating module (48), the new emoticon and the value corresponding with the new emoticon into the first emoticon-value list.

4. The method of claim 1, 2 or 3, wherein the second emoticon-value list is the same as or different from the first emoticon-value list.

5. A device for changing an emoticon in a chat interface performed by a terminal device having an instant messaging tool installed, and being **characterized by** comprising:
a first detecting module (41) configured to detect whether an instant message received by the chat interface of the instant messaging tool contains a first emoticon allowed to be changed;
a first determining module (42) configured to check a first emoticon-value list to determine a first value corresponding with the first emoticon if the first detecting module detects that the instant messaging tool contains the first emoticon, the first emoticon-value list comprising multiple first emoticons and values corresponding with the first emoticons;
an input box configured to receive a second emoticon;
a second determining module (43) configured to check a second emoticon-value list to determine a second value corresponding with the second emoticon, wherein the second emoticon is configured to change the first emoticon, the second emoticon-value list comprising multiple second emoticons and values corresponding with the second emoticons;
an adding module (44) configured to add the first value determined by the first determining module and the second value determined by the second determining module to obtain a value result; and
a processing module (45) configured to check the first emoticon-value list to change the first emoticon to an emoticon form corresponding to the value result obtained by the adding module.

6. The device of claim 5, wherein if the instant message contains at least one first emoticon, the first determining module (42) comprises:
a determining sub-module (421) configured to determine a value respectively corresponding with each first emoticon in the at least one first emoticon according to the first emoticon-value list; and
an adding sub-module (422) configured to add the first emoticons corresponded values determined by the determining sub-module to obtain the first value.

7. The device of claim 5 or 6, wherein the device further comprises:
a second detecting module (46) configured to detect whether a new emoticon exists in an emoticon library of the instant messaging tool;
a third determining module (47) configured to determine a value corresponding with the new emoticon if the second detecting module detects that the new emoticon exists in the emoticon library; and
an updating module (48) configured to update the new emoticon and the new emoticon corresponded value determined by the third determining module into the first emoticon-value list.

8. The device of claim 5, 6 or 7, wherein the second emoticon-value list is the same as or different from the first emoticon-value list.

9. A recording medium readable by a computer and having recorded thereon a computer program including instructions for executing the steps of a method for changing an emoticon in a chat interface according to any one of claims 1 to 4.

## Patentansprüche

1. Verfahren zum Ändern eines Emoticons in einer Chat-Oberfläche, das von einem Endgerät durchgeführt wird, in dem ein Instant-Messaging-Tool installiert ist, und **dadurch gekennzeichnet, dass** es Folgendes aufweist:
Erkennen (S101) in einem ersten Erkennungsmodul (41), ob eine durch die Chat-Oberfläche des Instant-Messaging-Tools empfangene Instant-Messaging-Nachricht ein erstes Emoticon enthält, das geändert werden darf;
Prüfen (S102) einer Werteliste erster Emoticons in einem ersten Bestimmungsmodul (42) zum Bestimmen eines ersten Werts, der dem ersten Emoticon entspricht, falls die Instant-Messaging-Nachricht das erste Emoticon enthält, wobei die Werteliste erster Emoticons mehrere erste Emoticons und den ersten Emoticons entsprechende Werte aufweist;
Empfangen eines zweiten Emoticons von einem Benutzer in einem Eingabefeld der Chat-Oberfläche;
Prüfen (S103) einer Werteliste zweiter Emoticons in einem zweiten Bestimmungsmodul (43) zum Bestimmen eines zweiten Werts, der dem zweiten Emoticon entspricht, wobei das zweite Emoticon zum Ändern des ersten Emoticons konfiguriert ist, wobei die Werteliste zweiter Emoticons mehrere zweite Emoticons und den zweiten Emoticons entsprechende Werte aufweist;
Addieren (S104) des ersten Werts und des zweiten Werts in einem Addiermodul (44) zum Erhalten eines Wertergebnisses; und
Prüfen (S105) der Werteliste erster Emoticons in einem Verarbeitungsmodul zum Ändern des ersten Emoticons in eine Emoticonform, die dem Wertergebnis entspricht.

2. Verfahren nach Anspruch 1, wobei der Schritt des Bestimmens des ersten Werts, der dem ersten Emoticon entspricht, falls die Instant-Messaging-Nachricht wenigstens ein erstes Emoticon enthält, Folgendes aufweist:
Bestimmen eines Werts, der jeweilig jedem ersten Emoticon in dem wenigstens einen ersten Emoticon gemäß der Werteliste erster Emoticons entspricht; und
Addieren der Werte, die den ersten Emoticons entsprechen, zum Erhalten des ersten Werts.

3. Verfahren nach Anspruch 1 oder 2, wobei das Verfahren ferner Folgendes aufweist:
Erkennen (S301) in einem zweiten Erkennungsmodul (46), ob es in einer Emoticon-Bibliothek des Instant-Messaging-Tools ein neues Emoticon gibt;
Bestimmen (S302) eines Werts, der dem neuen Emoticon entspricht, in einem dritten Bestimmungsmodul (47), falls erkannt wird, dass es das neue Emoticon in der Emoticon-Bibliothek gibt; und
Aktualisieren (S303) des neuen Emoticons und des Werts, der dem neuen Emoticon entspricht, in einem Aktualisierungsmodul (48) in die Werteliste erster Emoticons.

4. Verfahren nach Anspruch 1, 2 oder 3, wobei die Werteliste zweiter Emoticons die gleiche wie die Werteliste erster Emoticons oder von ihr verschieden ist.

5. Vorrichtung zum Ändern eines Emoticons in einer Chat-Oberfläche, das von einem Endgerät durchgeführt wird, in dem ein Instant-Messaging-Tool installiert ist, und **dadurch gekennzeichnet, dass** es Folgendes aufweist:
ein erstes Erkennungsmodul (41), das zum Erkennen konfiguriert ist, ob eine durch die Chat-Oberfläche des Instant-Messaging-Tools empfangene Instant-Messaging-Nachricht ein erstes Emoticon enthält, das geändert werden darf;
ein erstes Bestimmungsmodul (42), das zum Prüfen einer Werteliste erster Emoticons zum Bestimmen eines ersten Werts, der dem ersten Emoticon entspricht, falls das erste Erkennungsmodul erkennt, dass das Instant-Messaging-Tool das erste Emoticon enthält, konfiguriert ist, wobei die Werteliste erster Emoticons mehrere erste Emoticons und den ersten Emoticons entsprechende Werte aufweist;
ein Eingabefeld, das zum Empfangen eines zweiten Emoticons konfiguriert ist;
ein zweites Bestimmungsmodul (43), das zum Prüfen einer Werteliste zweiter Emoticons zum Bestimmen eines zweiten Werts, der dem zweiten Emoticon entspricht, konfiguriert ist, wobei das zweite Emoticon zum Ändern des ersten Emoticons konfiguriert ist, wobei die Werteliste zweiter Emoticons mehrere zweite Emoticons und den zweiten Emoticons entsprechende Werte aufweist;
ein Addiermodul (44), das zum Addieren des durch das erste Bestimmungsmodul bestimmten ersten Werts und des durch das zweite Bestimmungsmodul bestimmten zweiten Werts zum Erhalten eines Wertergebnisses konfiguriert ist; und
ein Verarbeitungsmodul (45), das zum Prüfen der Werteliste erster Emoticons zum Ändern des ersten Emoticons in eine Emoticonform, die dem durch das Addiermodul erhaltenen Wertergebnis entspricht, konfiguriert ist.

6. Vorrichtung nach Anspruch 5, wobei, falls die Instant-Messaging-Nachricht wenigstens ein erstes Emoticon enthält, das erste Bestimmungsmodul (42) Folgendes aufweist:
ein Bestimmungsuntermodul (421), das zum Bestimmen eines Werts, der jeweilig jedem ersten Emoticon in dem wenigstens einen ersten Emoticon gemäß der Werteliste erster Emoticons entspricht, konfiguriert ist; und
ein Addieruntermodul (422), das zum Addieren der durch das Bestimmungsuntermodul bestimmten Werte, die den ersten Emoticons entsprechen, zum Erhalten des ersten Werts konfiguriert ist.

7. Vorrichtung nach Anspruch 5 oder 6, wobei die Vorrichtung ferner Folgendes aufweist:
ein zweites Erkennungsmodul (46), das zum Erkennen, ob es in einer Emoticon-Bibliothek des Instant-Messaging-Tools ein neues Emoticon gibt, konfiguriert ist;
ein drittes Bestimmungsmodul (47), das zum Bestimmen eines Werts, der dem neuen Emoticon entspricht, falls das zweite Erkennungsmodul erkennt, dass es das neue Emoticon in der Emoticon-Bibliothek gibt, konfiguriert ist; und
ein Aktualisierungsmodul (48), das zum Aktualisieren des neuen Emoticons und des durch das dritte Bestimmungsmodul bestimmten Werts, der dem neuen Emoticon entspricht, in die Werteliste erster Emoticons konfiguriert ist.

8. Vorrichtung nach Anspruch 5, 6 oder 7, wobei die Werteliste zweiter Emoticons die gleiche wie die Werteliste erster Emoticons oder von ihr verschieden ist.

9. Aufzeichnungsmedium, das von einem Computer gelesen werden kann und auf dem ein Computerprogramm mit Anweisungen zum Ausführen der Schritte eines Verfahrens zum Ändern eines Emoticons in einer Chat-Oberfläche nach einem der Ansprüche 1 bis 4 aufgezeichnet ist.

## Revendications

1. Procédé pour changer une émoticône dans une interface de cyber-bavardage exécutée par un dispositif terminal ayant un outil de messagerie instantanée installé, et étant caractérisé en comprenant :
détecter (S101), à un premier module de détection (41), si un message instantané reçu par l'interface de cyber-bavardage de l'outil de messagerie instantanée contient une première émoticône autorisée à être changée ;
vérifier (S 102), à un premier module de détermination (42), une première liste de valeurs d'émoticônes pour déterminer une première valeur correspondant à la première émoticône si le message instantané contient la première émoticône, la première liste de valeurs d'émoticônes comprenant de multiples premières émoticônes et valeurs correspondant aux premières émoticônes ;
recevoir, à une boîte d'entrée de l'interface de cyber-bavardage, une deuxième émoticône d'un utilisateur ;
vérifier (S 103), à un deuxième module de détermination (43), une deuxième liste de valeurs d'émoticônes correspondant à la deuxième émoticône, où la deuxième émoticône est configurée pour changer la première émoticône, la deuxième liste de valeurs d'émoticônes comprenant de multiples deuxièmes émoticônes et valeurs correspondant aux deuxièmes émoticônes ;
additionner (S104), à un module d'addition (44), la première valeur et la deuxième valeur pour obtenir un résultat de valeurs ; et
vérifier (S 105), à un module de traitement, la première liste de valeurs d'émoticônes pour changer la première émoticône en une forme d'émoticône correspondant au résultat de valeurs.

2. Procédé selon la revendication 1, dans lequel l'étape consistant à déterminer la première valeur correspondant à la première émoticône si le message instantané contient au moins une première émoticône, comprend :
déterminer une valeur correspondant respectivement à chaque première émoticône dans la au moins une première émoticône conformément à la première liste de valeurs d'émoticônes ; et
additionner les valeurs correspondant aux premières émoticônes pour obtenir la première valeur.

3. Procédé selon la revendication 1 ou 2, dans lequel le procédé comprend en outre :
détecter (S301), à un deuxième module de détection (46), si une nouvelle émoticône existe dans une bibliothèque d'émoticônes de l'outil de messagerie instantanée ;
déterminer (S302), à un troisième module de détermination (47), une valeur correspondant à la nouvelle émoticône s'il est détecté que la nouvelle émoticône existe dans la bibliothèque d'émoticônes ; et
actualiser (S303), à un module d'actualisation (48), la nouvelle émoticône et la valeur correspondant à la nouvelle émoticône dans la première liste de valeurs d'émoticônes.

4. Procédé selon la revendication 1, 2 ou 3, dans lequel la deuxième liste de valeurs d'émoticônes est la même que ou différente de la première liste de valeurs d'émoticônes.

5. Dispositif pour changer une émoticône dans une interface de cyber-bavardage exécutée par un dispositif terminal ayant un outil de messagerie instantanée installé, et étant caractérisé en comprenant :
un premier module de détection (41) configuré pour détecter si un message instantané reçu par l'interface de cyber-bavardage de l'outil de messagerie instantanée contient une première émoticône autorisée à être changée ;
un premier module de détermination (42) configuré pour vérifier une première liste de valeurs d'émoticônes pour déterminer une première valeur correspondant à la première émoticône si le premier module de détection détecte que l'outil de messagerie instantanée contient la première émoticône, la première liste de valeurs d'émoticônes comprenant de multiples premières émoticônes et valeurs correspondant aux premières émoticônes ;
une boîte d'entrée configurée pour recevoir une deuxième émoticône ;
un deuxième module de détermination (43) configuré pour vérifier une deuxième liste de valeurs d'émoticônes pour déterminer une deuxième valeur correspondant à la deuxième émoticône, où la deuxième émoticône est configurée pour changer la première émoticône, la deuxième liste de valeurs d'émoticônes comprenant de multiples deuxièmes émoticônes et valeurs correspondant aux deuxièmes émoticônes ;
un module d'addition (44) configuré pour additionner la première valeur déterminée par le premier module de détermination et la deuxième valeur déterminée par le deuxième module de détermination pour obtenir un résultat de valeurs ; et
un module de traitement (45) configuré pour vérifier la première liste de valeurs d'émoticônes pour changer la première émoticône en une forme d'émoticône correspondant au résultat de valeurs obtenu par le module d'addition.

6. Dispositif selon la revendication 5, dans lequel si le message instantané contient au moins une première émoticône, le premier module de détermination (42) comprend :
un sous-module de détermination (421) configuré pour déterminer une valeur correspondant respectivement à chaque première émoticône dans la au moins une première émoticône conformément à la première liste de valeurs d'émoticônes ; et
un sous-module d'addition (422) configuré pour additionner les valeurs correspondant aux premières émoticônes déterminées par le sous-module de détermination pour obtenir la première valeur.

7. Dispositif selon la revendication 5 ou 6, où le dispositif comprend en outre :
un deuxième module de détection (46) configuré pour détecter si une nouvelle émoticône existe dans une bibliothèque d'émoticônes de l'outil de messagerie instantanée ;
un troisième module de détermination (47) configuré pour déterminer une valeur correspondant à la nouvelle émoticône si le deuxième module de détection détecte que la nouvelle émoticône existe dans la bibliothèque d'émoticônes ; et
un module d'actualisation (48) configuré pour actualiser la nouvelle émoticône et la valeur correspondant à la nouvelle émoticône déterminée par le troisième module de détermination dans la première liste de valeurs d'émoticônes.

8. Dispositif selon la revendication 5, 6 ou 7, dans lequel la deuxième liste de valeurs d'émoticônes est la même que ou différente de la première liste de valeurs d'émoticônes.

9. Support d'enregistrement lisible par un ordinateur et ayant enregistré dessus un programme informatique comprenant des instructions pour exécuter les étapes d'un procédé pour changer une émoticône dans une interface de cyber-bavardage selon l'une quelconque des revendications 1 à 4.
